# EUROPÄISCHE PATENTANMELDUNG

(11) **EP 4 485 771 A1**
(43) Veröffentlichungstag der Anmeldung: **01.01.2025**
(21) Anmeldenummer: 23182126.5
(22) Anmeldetag: 28.06.2023
(51) Int. Cl.: H02K 15/12, H02K 3/493, H02K 15/00

(54) **NUTFÜLLUNG MITTELS DUROMER BEI ELEKTRISCHER MASCHINE**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Ein Nutverschluss einer Wicklungsnut einer elektrischen Maschine soll effizient hergestellt werden. Dazu wird eine viskose Duromeremulsion bereitgestellt, in deren Duromermatrix Feststoffpartikel als Härter und magnetisierbare Partikel eingemischt sind. Die viskose Duromeremulsion wird beispielsweise als Raupe (10) in die Nut (1) der elektrischen Maschine eingebracht. Anschließend erfolgt ein Erwärmen der viskosen Duromeremulsion, sodass die Feststoffpartikel schmelzen und mit der Duromermatrix reagieren. Schließlich erfolgt ein Aushärten der erwärmten Duromeremulsion.

## Beschreibung

Die vorliegende Erfindung betrifft ein Verfahren zum Füllen einer Nut einer elektrischen Maschine. Darüber hinaus betrifft die vorliegende Erfindung eine entsprechende Vorrichtung zum Füllen einer solchen Nut.

Niederspannungsmotoren werden typischerweise mit einer Runddraht-Wicklung hergestellt, welche im Voraus über einen Flyer-/Schablonenwickler zu Spulen gewickelt werden und im Anschluss vollautomatisiert in das mit den jeweiligen Nuten versehene Blechpaket eingezogen werden. Hierbei ist die kritische Stelle immer der Nutspalt, welcher durch die zwei benachbarten Nutzähne definiert wird. Dieser ist deutlich kleiner als die Nut an sich, wodurch sich wünschenswerterweise die Magnetkreise effektiver schließen, jedoch die gesamte Kupferwicklung durch diese Querschnitt-/Verjüngung gezogen werden muss. Um ideale Magnetfeldeigenschaften im Blechpaket zu generieren, müsste der Nutspalt derart schmal gewählt werden, dass die Nutspaltbreite kleiner als der Durchmesser eines Einzeldrahtes der Wicklung ist. Dies würde jedoch fertigungstechnisch zu großen Problemen führen, da keine typischen Wickel-Einziehverfahren mehr verwendet werden können. Die aktuellen Blechgeometrien sind hierbei eine Art Kompromiss, der beide Notwendigkeiten einbezieht. Der Nutspalt hat ca. die lichte Breite von zwei bis vier Einzeldrähten (Durchmesser), wodurch durch eine geeignete Lamellenführung beim Einzug das Kupferbündel auf diese Breite partiell komprimiert wird und der Nachteil in Bezug auf die Magnetkreisdimensionierung akzeptabel bleibt.

Insbesondere bei größeren Maschinen (Mittelspannungs- oder Hochspannungsmotoren) mit höheren Anforderungen wird der vorhandene Nutspalt im Anschluss mittels eines magnetischen Nutverschlusses verschlossen. Hierbei handelt es sich um magnetische Eisenpartikel verschiedenster Ausführungen, welche meist im Zusammenspiel mit einem Kunststoff als "Compound" vorliegen. Dieser "Compound" (Füllstoffpartikel = Eisen, Matrix = Kunststoff) wird oftmals vorgefertigt und als Nutkeile, welche mechanisch eingeschoben werden, verwendet. Dies hat den Nachteil, dass sich der Nutverschluss im laufenden Betrieb der Maschine aufgrund von Vibrationen und auftretenden Kräften lockern und lösen kann und damit den Läufer blockiert und somit zum Ausfall der Maschine führt.

Zum anderen sind vorgefertigte Nutspalte keine wirtschaftliche Lösung für ein variantenreiches Produktportfolio, wie dies oftmals im Bereich der Niederspannungsmotoren vorliegt.

Eine andere Anwendungsform bei Mittel- und Hochspannungsmaschinen ist die Nutzung einer noch unvernetzten, hochgefüllten Paste, bestehend aus Eisenfüllstoffpartikeln und chemischem Reaktivharz (Mischungsverhältnis ca. 90 Gewichtsprozent Eisenfüllstoff, 10 Gewichtsprozent polymere Matrix). Die Masse muss hierbei unter aktiver Kühlung mehrere Stunden geknetet werden, um eine Homogenisierung der Partikel in der Matrix sicherzustellen und dann gekühlt gelagert und transportiert werden, da es sich um eine einkomponentige, reaktive Masse handelt. Die Matrixkomponente ist beispielsweise ein anhydritisch gehärtetes Epoxidharz, welches unter Zuführung höherer Temperatur (150°C, mehrere Stunden) zu einem Formstoff härtet, welcher ausreichend mechanische Festigkeit aufweist und eine Glasübergangstemperatur von über 140°C besitzt, wodurch die Anforderungen der Mittelspannungs- und Hochspannungsmaschinen an das Isoliersystem und die Peripherie erfüllt sind. Aufgrund der Wahl der Matrix und der Eisenfüllstoffzusammensetzung als auch aufgrund der hohen mechanischen Anforderungen an den Endformstoff sowie beim Applizieren sind zusätzliche Additive, wie z.B. Talkum (als Schmierstoff) und Polymerfasern (als Armierung der Masse und Thixotropierung beim Verarbeiten) im einstelligen Gewichtsprozentbereich notwendig. Die Einbringung des Materials geschieht bei Raumtemperatur entweder händisch ("einspachteln") oder durch einen (teil-)automatisierten Raupenauftrag und anschließendem Einpressen mittels einer speziellen Rakel. Die thermische Härtung wird im Anschluss durch einen Heißluftofen beziehungsweise durch die Bestromung der Wicklungen herbeigeführt.

Die Aufgabe der vorliegenden Erfindung besteht darin, eine wirtschaftliche und energiearme Möglichkeit für die Nutfüllung insbesondere bei Niederspannungsmaschinen vorzuschlagen.

Erfindungsgemäß wird diese Aufgabe durch ein Verfahren und eine Vorrichtung entsprechend den unabhängigen Ansprüchen gelöst. Vorteilhafte Weiterbildungen der Erfindung ergeben sich aus den Unteransprüchen.

Der Erfindung liegt die Erkenntnis zugrunde, dass Niederspannungsmotoren, die eine hohe Effizienz aufweisen, nur sehr geringe Leistungsverluste haben, welche sich in einer Erwärmung des Rotors und des Stators manifestieren, wodurch insbesondere im Bereich eines möglichen Nutverschlusses eine Temperatur von über 100°C nahezu ausgeschlossen ist. Dies erlaubt eine neue Sichtweise auf die thermische Stabilität des Isoliersystems und dessen Peripherie. Insbesondere die Peripherie (z.B. der Deckschieber) kann deutlich unterhalb der sonst für das Primärisoliersystem geforderten Wärmeklasse F/H (155°/180°C, 20000 h) liegen, ohne die Lebensdauer oder die Leistungsfähigkeit der Maschine negativ zu beeinflussen.

Aufgrund dieser Entwicklung wird erfindungsgemäß eine alternative Polymerlösung für die Nutfüllung vorgestellt, welche sich als wirtschaftliche und zugleich CO₂-freundliche Lösung (hinsichtlich Applikation und Prozess) insbesondere für Niederspannungsmotoren darstellt.

Erfindungsgemäß wird ein Verfahren zum Füllen einer Nut einer elektrischen Maschine bereitgestellt. Bei der Nut handelt es sich insbesondere um eine Wicklungsnut, in die eine Wicklung beziehungsweise Spule eingezogen werden kann. Die Nut ergibt sich typischerweise in einem Blechpaket eines magnetisch aktiven Teils der elektrischen Maschine. Bei der elektrischen Maschine kann es sich beispielsweise um einen Motor, einen Generator, einen Transformator und dergleichen handeln.

Bei dem Verfahren erfolgt ein Bereitstellen einer viskosen Duromeremulsion, in deren Duromermatrix Feststoffpartikel als Härter und magnetisierbare Partikel eingemischt sind. Die Duromeremulsion wird als Vorprodukt für ein Duromer, also einen Kunststoff, der nach Aushärtung durch Erwärmung oder andere Maßnahmen nicht mehr verformt werden kann, bereitgestellt. Die Emulsion ist viskos, also zähflüssig. Die Matrix der Duromeremulsion kann als Kunststoffmatrix beziehungsweise Duromermatrix bezeichnet werden. In diese Duromermatrix (erste Komponente) ist ein Härter (zweite Komponente) eingemischt. Damit die beiden Komponenten nicht von vorneherein miteinander reagieren, liegt der Härter in Form von Feststoffpartikeln vor. Diese Feststoffpartikel sind in der Duromeremulsion nicht gelöst und reagieren mit der Duromermatrix noch nicht.

Darüber hinaus sind in die Duromeremulsion magnetisierbare Partikel eingemischt. Bei den magnetisierbaren Partikeln kann es sich beispielsweise um Eisenpulver handeln. Es ist aber auch Pulver von anderen ferromagnetischen Metallen oder Legierungen denkbar.

In einem weiteren Schritt erfolgt ein Einbringen der viskosen Duromeremulsion in die Nut der elektrischen Maschine. Üblicherweise befindet sich hierzu die jeweilige Wicklung beziehungsweise Spule bereits in der Nut, sodass die Duromeremulsion auf das jeweilige Drahtbündel beziehungsweise den Deckschieber aufgebracht wird. Dabei sollte eine derartige Menge an Duromeremulsion in die Nut eingebracht werden, die letztlich einen passenden Nutverschluss nach Aushärtung darstellen kann.

In einem weiteren Verfahrensschritt erfolgt ein Erwärmen der viskosen Duromeremulsion, sodass die Feststoffpartikel schmelzen und mit der Duromermatrix reagieren. Die viskose Duromeremulsion wird also vorzugsweise einmalig auf eine sogenannte Trigger-Temperatur erwärmt, sodass die Feststoffpartikel nicht nur schmelzen, sondern auch mit der Duromermatrix reagieren können. Bei dem Erwärmen wird also die Energie für das Schmelzen und gegebenenfalls für das Reagieren bereitgestellt. Dabei geht der Härter in der Duromermatrix in Lösung. Die Feststoffpartikel des Härters sollten in der Duromermatrix möglichst homogen verteilt sein, damit die Reaktion gleichmäßig verteilt stattfinden kann. Als Resultat der Reaktion ergibt sich ein Aushärten der erwärmten Duromeremulsion. Das ausgehärtete Duromer dient schließlich als Nutverschluss.

In vorteilhafter Weise kann also durch eine einmalige kurze Erwärmung eine Reaktion der beiden Komponenten der Duromeremulsion (Matrix und Härter) herbeigeführt werden. Darüber hinaus kann die Duromeremulsion mit einem konventionellen Dispenser wirtschaftlich in die jeweilige Nut eingebracht werden. Somit ergibt sich ein sehr effizientes Herstellungsverfahren für die elektrische Maschine.

In einem Ausführungsbeispiel ist vorgesehen, dass die Duromeremulsion ein natürliches Harz, ein Epoxidharz oder einen Klebstoff als die Duromermatrix aufweist. Neben dem natürlichen Harz kann also auch ein Epoxidharz als Kunstharz für das Duromer beziehungsweise den Nutschluss verwendet werden. Alternativ können auch sonstige Klebstoffe, die nicht auf Harzen basieren, für die Duromermatrix verwendet werden. Somit steht für die Erfindung ein weitgefächertes Duromerspektrum zur Verfügung.

Bei einem besonders bevorzugten Ausführungsbeispiel weist der Härter ein Amin auf. Amine sind organische Verbindungen, die Derivate des Ammoniaks sind und bei denen ein, zwei oder alle drei Wasserstoffatome des Ammoniaks durch Alkylgruppen oder Arylgruppen ersetzt sind oder sich zu mehr oder weniger unterschiedlichen heterocyclischen Ringsystemen zusammengeschlossen haben. Besonders vorteilhaft kann Amin als Härter für Epoxidharze verwendet werden. Derartige Epoxy-Amin-Systeme können gegebenenfalls bei Raumtemperatur aushärten.

In einem weiteren Ausführungsbeispiel ist vorgesehen, dass in der Duromeremulsion 75 bis 90 Gewichtsprozent magnetisierbare Partikel, insbesondere Eisenpulver, eingemischt sind. Derartig hochprozentige Füllungen können aktive Kühlungen beim Einkneten erfordern, damit die Trigger-Temperatur nicht erreicht wird. Der hohe Gewichtsanteil der magnetisierbaren Partikel führt zu einem hocheffizienten Nutverschluss.

Bei einer weiteren vorteilhaften Ausgestaltung des erfindungsgemäßen Verfahrens erfolgt das Erwärmen der viskosen Duromeremulsion gerade so weit, dass das Schmelzen der Feststoffpartikel und das Reagieren des Härters mit der Duromermatrix ermöglicht wird. Bei diesem Erwärmen wird also versucht, eine unnötige Wärmezufuhr zu vermeiden. Eine Erwärmung über die Trigger-Temperatur sollte aus Gründen der Umweltfreundlichkeit vermieden werden. Liegt die Trigger-Temperatur beispielsweise bei 70°C, so sollte die Duromeremulsion eben gerade auf 70°C, aber nicht oder nur unwesentlich darüber erwärmt werden. Es sollte also nur so viel Energie zugeführt werden, dass das Schmelzen und das Reagieren des Härters mit der Duromermatrix zustande kommen kann.

In einem weiteren Ausführungsbeispiel ist vorgesehen, dass das Einbringen der viskosen Duromeremulsion in die Nut der elektrischen Maschine mit Hilfe eines Pastendosiersystems erfolgt. Da Härter und Matrix quasi als einkomponentige Emulsion vorliegen, kann für das Einbringen ein konventionelles Pastendosiersystem verwendet werden, wodurch die Wirtschaftlichkeit des gesamten Verfahrens gesteigert werden kann. Bei dem Pastendosiersystem kann es sich um einen Dispenser handeln, der für hochviskose Pasten ausgelegt ist.

In einem weiteren Ausführungsbeispiel erfolgt das Aushärten der Duromeremulsion größtenteils bei Raumtemperatur. Vorzugsweise genügt es also, dass die Duromeremulsion kurzzeitig auf die Trigger-Temperatur erhöht wird und anschließend im Wesentlichen auf Raumtemperatur abkühlt und dabei aushärtet. Gegebenenfalls erfolgt so der zeitlich größte Teil des Aushärtens bei Raumtemperatur. In diesem Fall ist für das Aushärten keine zusätzliche Energie erforderlich, was wiederum Effizienzvorteile für das Verfahren mit sich bringt.

In einem Ausführungsbeispiel kann vorgesehen sein, dass nach dem Aushärten ein duroplastischer Formstoff mit einer Glasübergangstemperatur von über 60°C entsteht. Vorzugsweise ergibt sich eine Glasübergangstemperatur zwischen 60°C und 100°C. Dies bedeutet, dass der duroplastische Formstoff beziehungsweise das Duromer ebenfalls bis 60°C hart bleibt und somit die Nutverschluss-Funktion zuverlässig erfüllen kann. Erst bei höheren Temperaturen, die bei sehr effizienten Niederspannungsmotor gar nicht erreicht werden, würde der Nutverschluss plastisch werden.

Zudem kann in einem Ausführungsbeispiel vorgesehen sein, dass das Erwärmen der viskosen Duromeremulsion unmittelbar vor und/oder unmittelbar nach dem Einbringen der viskosen Duromeremulsion in die Nut der elektrischen Maschine erfolgt. Beispielsweise kann das Erwärmen direkt in dem Dispenser erfolgen. Der Dispenser weist in diesem Fall eine Heizfunktion auf und löst das Schmelzen und Reagieren des Härters bereits vor dem Einbringen der Duromeremulsion in die Nut aus. Alternativ oder zusätzlich kann die Duromeremulsion auch unmittelbar nach dem Einbringen in die Nut beispielsweise durch eine Infrarotlampe oder eine Bestromung der jeweiligen Wicklung erfolgen. Diese Variante hat den Vorteil, dass ein günstiger Dispenser ohne Heizfunktion genutzt werden kann. Demgegenüber hat die erste Variante mit dem beheizbaren Dispenser den Vorteil, dass im Wesentlichen nur die Duromeremulsion beheizt wird und keine umgebenden Teile der elektrischen Maschine.

Bei einer weiteren Ausführungsform des erfindungsgemäßen Verfahrens wird bei dem Einbringen der viskosen Duromeremulsion in die Nut der elektrischen Maschine ein viskoser Strang aus der Duromeremulsion auf ein Drahtbündel in der Nut appliziert. Bei dem viskosen Strang handelt es sich um eine sogenannte pastöse "Raupe". Eine solche Raupe besitzt im applizierten Zustand in der Regel einen kreissegmentförmigen Querschnitt und erstreckt sich länglich in Applikationsrichtung. Sie kann günstig mit einer Düse appliziert werden. Üblicherweise wird die Raupe auf einen Deckschieber aufgebracht, der ein Drahtbündel in der Nut typischerweise nach oben abschließt. Somit wird die Raupe in der Regel nicht direkt, sondern indirekt auf das Drahtbündel appliziert.

In einem weiteren Ausführungsbeispiel ist vorgesehen, dass das Drahtbündel unmittelbar vor dem Applizieren des viskosen Strangs in Richtung Nutgrund gedrückt wird. Die in die Nut eingebrachte Wicklung, d.h. das dortige Drahtbündel, lässt sich in der Regel komprimieren. Dabei wird der Deckschieber beziehungsweise die oberste Drahtschicht nach unten zum Nutgrund gedrückt. Dadurch entsteht mehr Raum für das Applizieren des viskosen Duromerstrangs.

Bei einer Weiterentwicklung kann sich das Drahtbündel in der Nut nach dem Applizieren des viskosen Strangs/Raupe entspannen, wobei ein Teil des Strangs/Raupe zur Bildung eines Formschlusses hinter einen Nutvorsprung gedrückt wird. Dies ist insbesondere dann der Fall, wenn der viskose Strang breiter als die lichte Öffnung der Nut ist. In diesem Fall werden die über die Nutöffnung hinausragenden Teile des Strangs bei dem Entspannen des Drahtbündels gegen den Nutvorsprung gedrückt, wodurch im Nutspalt ein Hinterschnitt entsteht. Dieser Hinterschnitt sorgt für eine vorteilhafte Fixierung des Duromers im Nutspalt durch Formschluss.

Weiterhin kann vorgesehen sein, dass der viskose Strang nach dem Einbringen in die Nut oberflächenbündig abgezogen wird. Durch das Abziehen kann erreicht werden, dass die Oberfläche des magnetisch aktiven Elements der elektrischen Maschine flach bleibt und das Duromer nicht über den Nutspalt hinausragt. Dadurch kann beispielsweise der Luftspalt zwischen Rotor und Stator sehr gering gehalten werden. Das Abziehen des überflüssigen Materials des viskosen Strangs kann beispielsweise mit der Düse eines Dispensers erfolgen und/oder mit einem separaten Werkzeug.

Die obige Aufgabe wird erfindungsgemäß auch gelöst durch eine Vorrichtung zum Füllen einer Nut (Wicklungsnut) einer elektrischen Maschine, aufweisend einen Dispenser zum Bereitstellen eines viskosen Duromeremulsion, in dessen Duromermatrix Feststoffpartikel als Härter(reagieren noch nicht) und magnetisierbare Partikel (z.B. Eisenpulver) eingemischt sind, einer Düse an dem Dispenser zum Einbringen der viskosen Duromeremulsion in die Nut der elektrischen Maschine (als Nutverschluss), einer Heizeinrichtung zum (ggf. örtlich und zeitlich begrenzten) Erwärmen der viskosen Duromeremulsion, so dass die Feststoffpartikel schmelzen und mit der Duromermatrix reagieren, wodurch die Duromeremulsion aushärtet.

Insbesondere kann die Heizeinrichtung also gegebenenfalls für ein örtlich und/oder zeitlich begrenztes Erwärmen der viskosen Duromeremulsion sorgen. Dies kann sich beispielsweise dadurch ergeben, dass die Duromerraupe bei der Auftragbewegung nur an einem begrenzten Ort lokal erwärmt wird. Aufgrund der Bewegung der Raupe beziehungsweise des Strangs ergibt sich dadurch auch ein zeitlich begrenztes Erwärmen des jeweiligen Raupen- bzw. Strangteils.

Die oben im Zusammenhang mit dem erfindungsgemäßen Verfahrenen geschilderten Vorteile und Varianten gelten sinngemäß auch für die erfindungsgemäße Vorrichtung. Dabei können die einzelnen Verfahrensmerkmale als funktionelle Merkmale der Vorrichtung gesehen werden.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:
- FIG 1: eine Nut einer elektrischen Maschine gefüllt mit einem Drahtbündel;
- FIG 2: die Nut von FIG 1 mit eingepresstem Drahtbündel;
- FIG 3: die Nut mit applizierter Nutverschlussmasse;
- FIG 4: die Nut mit verschlossenem Nutschlitz;
- FIG 5: die Applikation der Nutverschlussmasse in Nutlängsrichtung; und
- FIG 6: ein weiteres Ausführungsbeispiel für die Applikation der Nutverschlussmasse.

Die nachfolgend geschilderten Ausführungsbeispiele stellen bevorzugte Ausführungsformen der vorliegenden Erfindung dar.

Die Tatsache, dass insbesondere Niederspannungsmotoren sehr effizient betrieben werden können und der Nutverschluss kaum Temperatur über 100°C erreicht, wird dazu genutzt, den Nutverschluss mittels einer Duromeremulsion herzustellen, in die neben den magnetisierbaren Partikeln auch der Härter in Form von Feststoffpartikeln in die Duromermatrix eingemischt beziehungsweise eingeknetet ist.

In einer konkreten Ausgestaltung wird die polymere Matrix unabhängig von der Zusammensetzung und der gegebenenfalls Optimierung der Partikelgrößenverteilung des Eisenfüllstoffs durch eine vom Stand der Technik abweichende substituiert.

Aufgrund der deutlich kleineren Nutspalte (ca. 2 bis 5 mm im Vergleich zu größeren Maschinen mit ca. 2 cm) ist eine Zugabe von Polymerfasern zur Armierung nicht notwendig. Unabhängig von anderen Merkmalen soll also zumindest eine Ausführungsform darauf beruhen, dass die Duromeremulsion keine Polymerfasern aufweist. Die Applikation der Duromeremulsion kann somit über ein übliches Pastendosiersystem erfolgen, da keine "hochscherende/hochviskose" Komponente zur Paste (d.h. Duromeremulsion) hinzugegeben wird, was üblicherweise die vollautomatisierte Förderung und Einbringung sehr schwierig gemacht hat.

Erfindungsgemäß wird daher zum Füllen einer (Wicklungs-)Nut einer elektrischen Maschine ein quasi "einkomponentig" vorliegendes Harzsystem verwendet, welches die besondere Eigenschaft besitzt, dass die für die Härtung notwendige zweite Komponente als Feststoffpartikel (z.B. mehrere Mikrometer Durchmesser) feindispergiert und stabilisiert innerhalb der ersten Komponente vorliegt. Dies ist beispielsweise bei einem Epoxy-Amin-System möglich, wobei der Amin-Härter als Feststoffpartikel im Epoxidharz nicht reaktiv dispergiert ist. Erst eine Erhöhung der Temperatur auf 70°C führt in diesem Fall zu einem Aufschmelzen der Härterpartikel, wodurch diese mit der Harzkomponente in Lösung gehen und ein reaktives Gemisch bilden. Durch die vorab sehr homogene Dispersion ist eine homogene Lösung sichergestellt.

Das Epoxy-Amin-System oder auch ein entsprechend anderes System (z.B. PU-Isocyanat-System) kann durch Energiezufuhr bzw. Temperaturerhöhung derart reaktiv eingestellt werden, dass anschließend eine Härtung bei Raumtemperatur erfolgen kann (ähnlich einem gemischten 2K-System). Als Basis für die Duromeremulsion kann beispielsweise das Produkt Elan-Glue^{®} EP 5350 verwendet werden. Das spezielle Epoxy-Amin-System kann mit der notwendigen Füllung an magnetisierbaren Partikeln (z.B. Eisenpulver) versehen werden. Vorzugsweise erreichen die magnetisierbaren Partikel einen Anteil von 75 bis 90 Gewichtsprozent. Gegebenenfalls muss bei einem Einbringen des Füllstoffs (z.B. Einkneten) wegen der Reibung eine aktive Kühlung verwendet werden, um das Erreichen der Trigger-Temperatur beziehungsweise das Aufschmelzen der Härterkomponente und damit die Erzeugung einer reaktiven Mischung zu verhindern.

Bei der Applikation der Duromeremulsion bzw. Paste in die Nut der elektrischen Maschine kann auf ein gewöhnliches EinKomponenten-Fördermittel zurückgegriffen werden wie etwa ein Dispenser für hochviskose Pasten z.B. der Firma Viskotec. Dabei ist vorteilhaft, wenn der Dispenser heizbar ausgestaltet ist, sodass die Paste bei der Applikation auf über die Trigger-Temperatur erhitzt wird und dann mit verminderter Viskosität als Raupe appliziert wird.

Günstigerweise ist eine weitere Erwärmung der applizierten Raupe zur Aushärtung nicht notwendig. Vielmehr kann die Durchhärtung, wie oben beschrieben, nach einer einmaligen Aufheizung und Aufschmelzen sowie einem "In-Lösung-Gehen" der Härterkomponente bei Raumtemperatur erreicht werden, sodass ein duroplastischer Formstoff mit einer Glasübergangstemperatur von beispielsweise 60 bis 100°C entsteht.

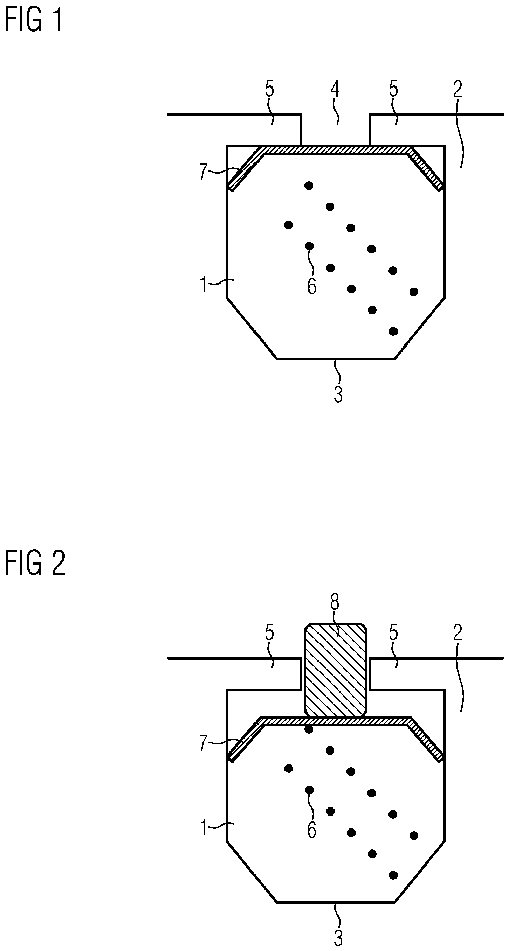

Die Applikation kann also durch Ablegen einer Raupe (= Compound-Paste) in die Nut der elektrischen Maschine erzielt werden. Wie nachfolgend anhand der FIG 1 bis 4 erläutert wird, kann mit der Raupe ein formschlüssiger Nutverschluss erreicht werden, der beispielsweise auf einem Deckschieber liegt und gegebenenfalls radial nach innen mit dem Innenradius des Blechpakets (bei einem Außenstator) abschließt.

Die FIG 1 bis 4 zeigen hierzu eine Nut 1, die in einem Blechpaket 2 ausgebildet ist. Die Nut 1 besitzt einen Nutgrund 3, der beispielsweise bei einem Außenstator radial außen ausgebildet ist. Gegenüber dem Nutgrund 3 befindet sich (bei dem Außenstator radial innen) ein Nutspalt 4. Der Nutspalt 4 befindet sich in Umfangsrichtung zwischen einer oder zwei Nutvorsprüngen 5.

In der Nut 1 befindet sich ein Drahtbündel 6 einer Wicklung der elektrischen Maschine. Das Drahtbündel 6 wurde durch den Nutspalt 4 in die Nut 1 eingelegt. Ein Deckschieber 7, der sich in Längsrichtung der Nut erstreckt und mit den Nutvorsprüngen 5 einen Formschluss bildet, verhindert, dass das Drahtbündel 6 aus der Nut 1 austreten kann. Im Zustand von FIG 1 liegt der Deckschieber 7 durch das Drahtbündel 6 an den Nutvorsprüngen 5 an.

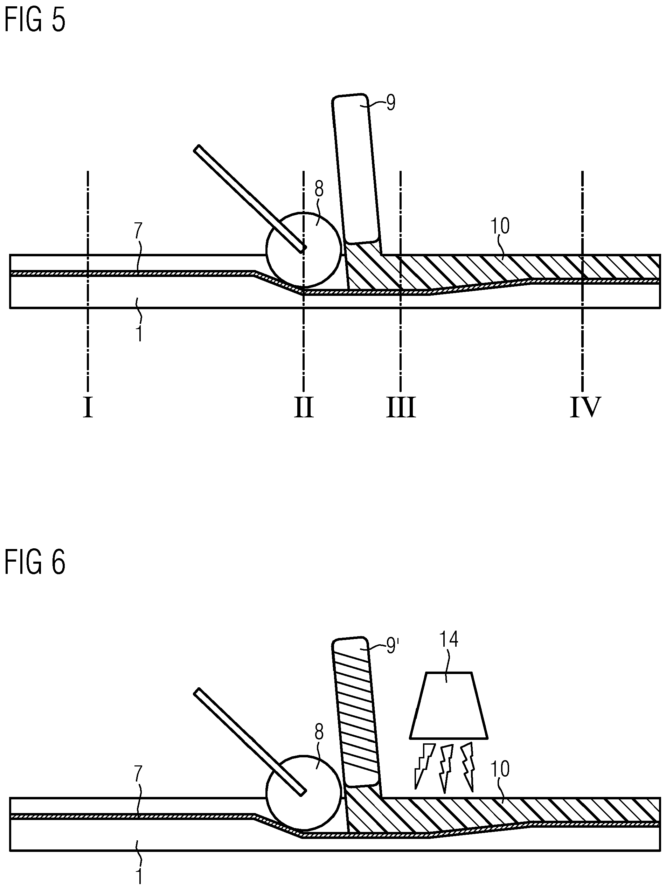

FIG 5 zeigt die Nut 1 im Längsschnitt. Eine Stelle des Querschnitts von FIG 1 vor der Applikation der Raupe/Duromeremulsion ist in FIG 5 mit I bezeichnet.

FIG 2 zeigt einen Querschnitt durch die Nut 1 an der Stelle II von FIG 5. Speziell wird an dieser Stelle durch eine Drückerwalze 8 oder ein anderes geeignetes Werkzeug der Deckschieber 7 und das darunterliegende Drahtbündel 6 in Richtung Nutgrund gedrückt und somit komprimiert. Auch aus FIG 5 ist zu erkennen, dass an der Querschnittstelle II der Deckschieber 7 tiefer in die Nut 1 gedrückt ist.

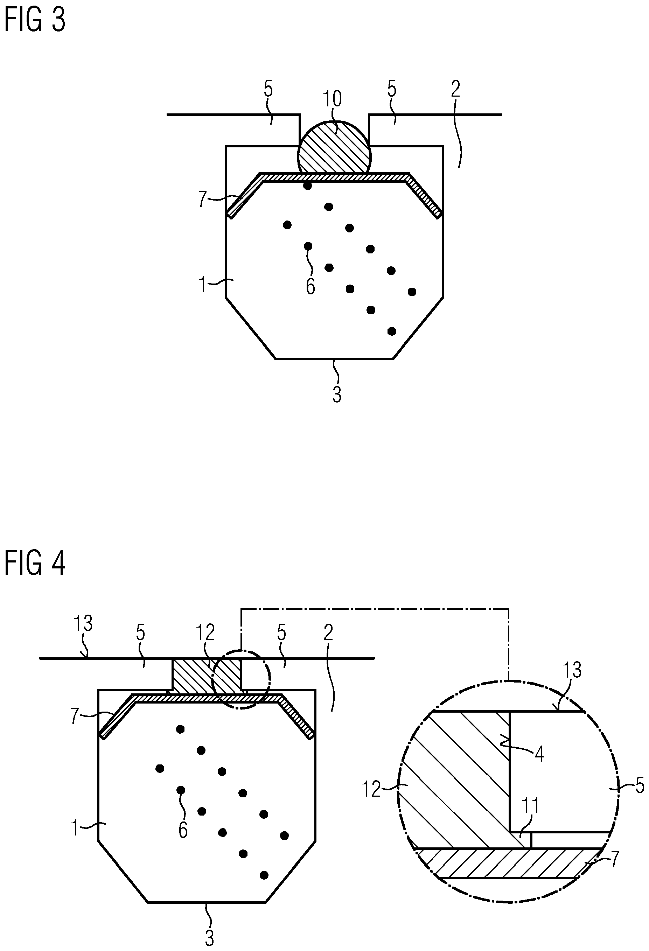

Unmittelbar anschließend an die Drückerwalze 8 wird mit einer Dispenser-Düse 9 die Duromeremulsion (einschließlich Kunststoff- bzw. Duromermatrix, Härter und magnetisierbaren Partikeln) als Strang bzw. Raupe 10 auf das Drahtbündel 6 oder den Deckschieber 7 aufgetragen, was FIG 3 an der Querschnittstelle III zeigt. An dieser Querschnittstelle III befindet sich das Drahtbündel 6 bzw. der Deckschieber 7 noch im durch die Drückerwalze 8 komprimierten Zustand, was auch die tiefe Lage des Deckschiebers 7 an der Querschnittstelle III von FIG 5 zeigt.

Die Raupe 10 kann einen kreissegmentförmigen Querschnitt besitzen. Vorzugsweise ist sie etwas breiter als der Nutspalt 4. Dies hat den Vorteil, dass durch Teile der Raupe 10, d.h. der Nutverschlussmasse, die hinter die Nutvorsprünge 5 ragen, Hinterschnitte 11 gebildet werden können, wenn sich das Drahtbündel 6 gemäß FIG 4 wieder entspannt und den Deckschieber 7 zum Nutspalt 4 drückt. Dabei füllt die plastische Raupe 10 den Nutspalt 4, sodass sich der in FIG 4 dargestellte Nutverschluss 12 ergibt, der einen T-förmigen Querschnitt mit den Hinterschnitten 11 besitzt.

Ein vergrößerter Abschnitt des Nutverschlusses 12 ist ebenfalls in FIG 4 dargestellt. Er zeigt, wie insbesondere der Hinterschnitt 11 des Nutverschlusses 12 unter den Nutvorsprung 5 ragt und somit einen Formschluss bildet. Gegebenenfalls wird die Raupe 10 an der Oberseite 13 der Nut 1 abgezogen, damit der Nutverschluss 12 oberflächenbündig mit der Oberseite 12 wird. Für das Abziehen kann die Dispenser-Düse 9 oder ein separates Werkzeug verwendet werden.

Da die Duromeremulsion beispielsweise in dem Dispenser bzw. der Dispenser-Düse 9 über die Trigger-Temperatur erhitzt wurde, reagiert der Härter mit der Matrix, sodass der Nutverschluss 12 aushärtet und abkühlt. Bei einem geeigneten Matrix-Härter-System ist zum Aushärten keine weitere Energiezufuhr notwendig, sodass das Aushärten nach dem Abkühlen der Raupe auch bei Raumtemperatur weiter stattfinden kann.

FIG 6 zeigt eine alternative Ausführungsform zu der Applikation von FIG 5. Im Wesentlichen kann auf die Beschreibung von FIG 5 verwiesen werden. Auch hier wird beispielsweise ein Epoxidharz als Matrix verwendet, und ein Härter (z.B. Amin) ist darin ungelöst dispergiert. Der gekapselte Härter-Katalysator soll ebenfalls durch kurzzeitige Temperaturerhöhung zur Reaktion mit der Kunststoffmatrix gebracht werden. Anstelle der beheizbaren Dispenser-Düse 9 kann hier eine einfache nicht beheizbare Dispenser-Düse 9' verwendet werden, die die viskose Raupe 10 in die Nut 1 appliziert. Eine zusätzliche Heizeinrichtung 14 erwärmt die Raupe 10 im bereits applizierten Zustand. Die Heizeinrichtung 14 kann beispielsweise eine Infrarotlampe aufweisen. Alternativ kann die Heizeinrichtung 14 auch eine Wicklung in der Nut 1 umfassen, die bestromt wird. Unter Umständen wird auch die Dispenser-Düse 9' zusätzlich beheizt. Wesentlich ist lediglich, dass die Raupe 10 über die Trigger-Temperatur gebracht wird, sodass der Härter aufschmilzt und mit der Matrix reagieren kann.

Aufgrund der hohen Füllung der Paste mit z.B. Eisenpulver bleibt diese zunächst formstabil in den Nuten und härtet. Die Härtung erfolgt selbständig im Wesentlichen bei Raumtemperatur zu einem Formstoff, welcher eine Glasübergangstemperatur von z.B. 60 bis 100°C aufweist (das verwendete Isolierharz kann im gleichen Bereich liegen).

Wie die obigen Ausführungsbeispiele zeigen, ist somit eine vollautomatisierte Applikation des Nutverschlusses und dabei ein CO₂-effizientes, Zeit- und Energie-unkritisches Härten möglich.

In vorteilhafterweise kann durch eine vorgefertigte Duromeremulsion ein hoher Füllgrad von beispielsweise 75 bis 90 Gewichtsprozent erzielt werden. Als besonders vorteilhaft erweist sich das quasi einkomponentige Reaktivharzsystem mit gekapseltem Härter (z.B. Epoxy-Amin-System), das lediglich zum Schmelzen und Lösen der Härterkomponente auf ca. 70°C gebracht werden muss, um seine Trigger-Temperatur zu erreichen. Es ist damit eine Applikation mit kurzzeitiger Temperaturerhöhung z.B. durch Dispenserheizung und/oder IR-Lampe mit anschließender Härtung bei Raumtemperatur möglich.

Weiter vorteilhaft ist, dass in dem Compound bzw. der Duromeremulsion keine Faser-Armierung notwendig ist, sodass eine vollautomatisierte Applikation realisierbar ist. Die gegebenenfalls niedrige Glasübergangstemperatur ist für hocheffiziente Niederspannungsmotoren durchaus akzeptabel.

## Patentansprüche

1. Verfahren zum Füllen einer Nut (1) einer elektrischen Maschine **gekennzeichnet durch**
- Bereitstellen einer viskosen Duromeremulsion, in deren Duromermatrix Feststoffpartikel als Härter und magnetisierbare Partikel eingemischt sind,
- Einbringen der viskosen Duromeremulsion in die Nut (1) der elektrischen Maschine,
- Erwärmen der viskosen Duromeremulsion, so dass die Feststoffpartikel schmelzen und mit der Duromermatrix reagieren, und
- Aushärten der erwärmten Duromeremulsion.

2. Verfahren nach Anspruch 1, wobei die Duromeremulsion ein natürliches Harz, ein Epoxidharz oder einen Klebstoff als die Duromermatrix aufweist.

3. Verfahren nach Anspruch 1 oder 2, wobei der Härter ein Amin aufweist.

4. Verfahren nach einem der vorhergehenden Ansprüche, wobei in der Duromeremulsion 75 bis 90 Gewichtsprozent magnetisierbare Partikel, insbesondere Eisenpulver, eingemischt sind.

5. Verfahren nach einem der vorhergehenden Ansprüche, wobei das Erwärmen der viskosen Duromeremulsion gerade soweit erfolgt, dass das Schmelzen der Feststoffpartikel und das Reagieren des Härters mit der Duromermatrix ermöglicht wird.

6. Verfahren nach einem der vorhergehenden Ansprüche, wobei das Einbringen der viskosen Duromeremulsion in die Nut (1) der elektrischen Maschine mit Hilfe eines Pastendosiersystems erfolgt.

7. Verfahren nach einem der vorhergehenden Ansprüche, wobei das Aushärten der Duromeremulsion größtenteils bei Raumtemperatur erfolgt.

8. Verfahren nach einem der vorhergehenden Ansprüche, wobei nach dem Aushärten ein duroplastischer Formstoff mit einer Glasübergangstemperatur von über 60°C und insbesondere unter 100°C entsteht.

9. Verfahren nach einem der vorhergehenden Ansprüche, wobei das Erwärmen der viskosen Duromeremulsion unmittelbar vor und/oder unmittelbar nach dem Einbringen der viskosen Duromeremulsion in die Nut (1) der elektrischen Maschine erfolgt.

10. Verfahren nach einem der vorhergehenden Ansprüche, wobei bei dem Einbringen der viskosen Duromeremulsion in die Nut (1) der elektrischen Maschine ein viskoser Strang (10) aus der Duromeremulsion auf ein Drahtbündel (6) in der Nut (1) appliziert wird.

11. Verfahren nach Anspruch 10, wobei das Drahtbündel (6) unmittelbar vor dem Applizieren des viskosen Strangs (10) in Richtung Nutgrund (3) gedrückt wird.

12. Verfahren nach Anspruch 11, wobei sich nach dem Applizieren des viskosen Strangs (10) das Drahtbündel (6) in der Nut (1) entspannt und dabei ein Teil des Strangs zur Bildung eines Formschlusses hinter einen Nutvorsprung (5) gedrückt wird.

13. Verfahren nach einem der vorhergehenden Ansprüche, wobei der viskose Strang (10) nach dem Einbringen in die Nut (1) oberflächenbündig abgezogen wird.

14. Vorrichtung zum Füllen einer Nut (1) einer elektrischen Maschine
**gekennzeichnet durch**
- einen Dispenser zum Bereitstellen eines viskosen Duromeremulsion, in dessen Duromermatrix Feststoffpartikel als Härter und magnetisierbare Partikel eingemischt sind,
- einer Düse (9, 9`) an dem Dispenser zum Einbringen der viskosen Duromeremulsion in die Nut der elektrischen Maschine,
- einer Heizeinrichtung (14) zum Erwärmen der viskosen Duromeremulsion, so dass die Feststoffpartikel schmelzen und mit der Duromermatrix reagieren, wodurch die Duromeremulsion aushärtet.
